# EUROPEAN PATENT APPLICATION

(11) **EP 0 570 830 A1**
(43) Date of publication of application: **24.11.1993**
(21) Application number: 93107732.5
(22) Date of filing: 12.05.1993
(51) Int. Cl.: B23B 13/02, B23Q 7/03

(54) **Bar feeder device with sliding jaws**

(30) Priority: 20.05.1992 IT MI921213
(71) Applicant: CUCCHI GIOVANNI & C. S.r.l., I-20060 Bussero Milano (IT)
(72) Inventor: Cucchi, Giovanni, I-20060 Bussero (Milano) (IT)
(74) Representative: Coloberti, Luigi

(57) **Abstract**

A device for feeding bars (13) to machine tools. The device comprises bar support jaws (14, 15) slidingly movable along two opposite guideways (16, 17) which extend in the feeding direction of the bars (13); the jaws (14, 15) and a central pusher (27) are attached to drive chains (18, 19) to move jointly, accompanying the bar (13) during its forward movement. The guideways (16, 17), with the respective jaws (14, 15) and drive chains (18, 19) are supported by link rods (30, 31) to move sideways between close and spaced apart conditions, remaining parallel one to the other, with the pusher constantly aligned to the feed axis.

## Description

The present invention relates to a device for feeding bars to machine tools of the type described in the preamble of the main claim.

Most bar guiding devices in feeders for machine tools substantially comprise tubular elements or a plurality of aligned jaws, by means of which a bar is supported to rotate with the spindle of the machine tool, and to slide forwards while it is maintained in rapid rotation; one or more pusher devices act on the bar to move it by steps towards the spindle of the machine tool.

Guide devices of this kind are commonly used on bar feeders for lathes and are described in numerous prior patents.

EP-A- 213659 and EP-A 384 344, for example, illustrate guide devices composed of a plurality of opposite jaws in which the jaws can open to enable the bars to be loaded, and a pusher normally provided in these types of feeders, to pass through.

The feeders for bars of the kind mentioned above suffer from numerous disadvantages caused by vibrations and noise generated by the impact of the rapidly rotating bars against the support and guide jaws; this disadvantage, which entails harmful effects on the machining of the workpieces and on the proper functioning of the machine tool, in addition to that of the feeder itself, is mainly due to the fact that there are long unsupported portions of the bar which are not adequately guided between jaws or groups of adjacent jaws, more particularly between the rear pusher and the guide jaws themselves. Moreover, unsupported portions of a bar may become slightly deformed and rotate eccentrically, causing strong impact forces which are extremely dangerous due to the high working speeds of modern machine tools. This disadvantage is particularly felt both for bars which are large in diameter, due to the considerable masses in rotation, and for bars which are small in diameter, even filiform, or of a few millimetres, which may bend or even break if not adequately supported.

Moreover, in known guide devices, when the diameter of the bars to be fed differs considerably from the internal diameter of the guide surfaces of the jaws, the latter have to be replaced with an appreciable waste of time and productivity for the machine tool. EP-A- 384344 partly avoids this disadvantage since it allows the closure position of the jaws to be adjusted, adapting it on each occasion to the diameter of the bars to be guided. Nevertheless the device known from this document has the disadvantages referred to previously and is thus difficult to adapt to supporting and guiding bars which are very small in diameter.

The object of the present invention is to provide a bar feeder for machine tools which is substantially free of the disadvantages found in previously known devices, enabling the elimination of long unsupported portions of the bars or those which are not adequately guided, more particularly between the pusher and the bar support jaws, and which at the same time can also be adjusted to feed bars of different diameters.

A further object of the invention is to provide a bar feeder of the kind mentioned above, by means of which it is also possible to feed bars which are extremely small in diameter without the bars being subjected to strong axial thrusts or peak loads which could bend or break the bars themselves.

The abovementioned objects are achieved by means of a bar feeder for machine tools having the features of the main claim. The substantial innovation of the present invention mainly consists in the fact that the jaws for supporting the bars and a pusher can move together along guideways parallelly arranged to the feeding direction of the bars, supporting said bars in narrowly spaced positions, accompanying them at the same time during their forward movement.

Some embodiments of the present invention will be illustrated hereinunder with reference to the accompanying drawings, in which:
- Fig. 1: shows a longitudinal sectional view of a first embodiment of a feeder according to the invention, in a first working condition;
- Fig. 2: shows a sectional view similar to that of Fig. 1, in a second working condition;
- Fig. 3: is a cross sectional view along the dotted line 3-3 of Fig. 1;
- Fig. 4: shows an enlarged detail of a device for fast coupling of a main pusher and an additional pusher;
- Fig. 5: is a cross sectional view, showing a solution suitable for bars which are small in diameter;
- Fig. 6: is a side view illustrating schematically a further embodiment of a feeder according to the invention.

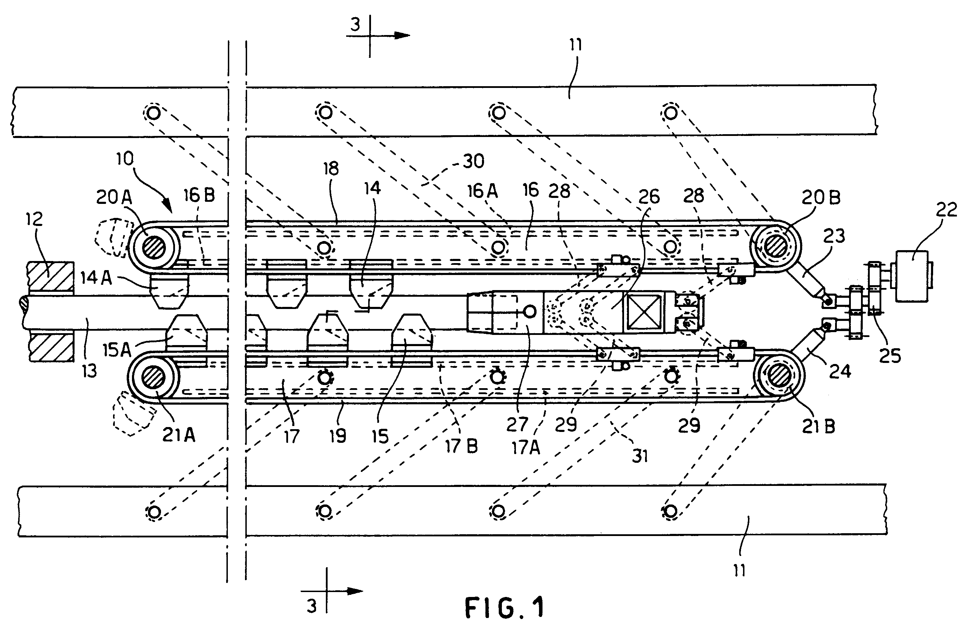

Referring now to figures 1 to 3, we will describe a first embodiment and the general features of the bar feeder according to the present invention.

In said figures, reference 10 denotes the assembly of the feeder device. 11 denotes a frame, partially shown, while 12 denotes a front guide sleeve, defining the feeding axis for a bar 13 in the direction of a spindle of a machine tool, not shown.

The feed device 10 substantially comprises two sets of jaws 14 and 15 respectively for supporting the bar 13 which has to be moved forwards by steps or continuously.

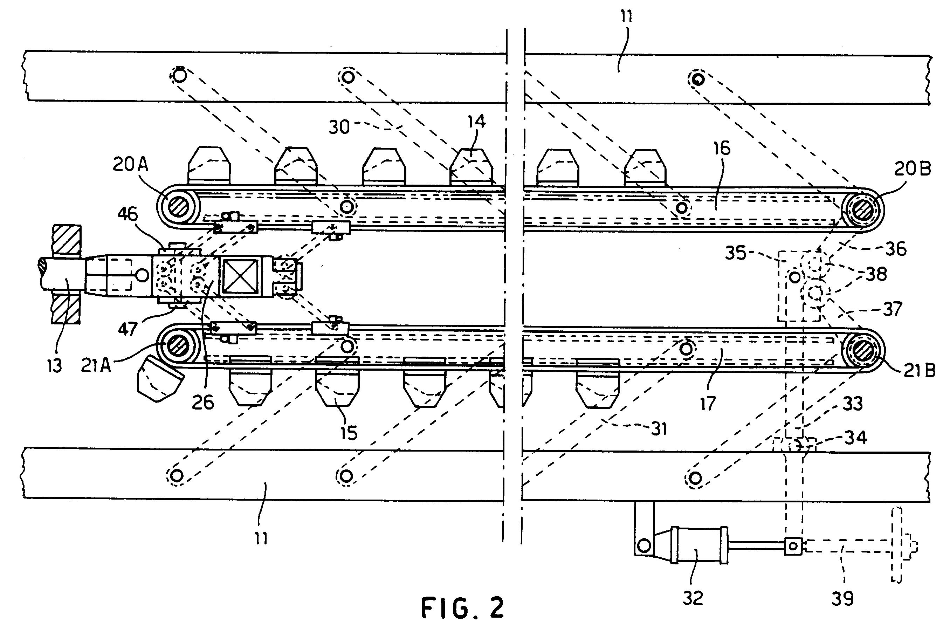

The jaws 14, 15 are slidingly carried , with the bar 13, by respective opposite guideways 16, 17 which extend parallelly in the feeding direction of the bars 13. The jaws 14 and 15 in each set are connected to respective drive chains 18, 19, in the form of endless chains which wind around end gears 20A, 20B, and 21A, 21B respectively, of which the gears 20B and 21B are connected to a drive motor 22, via shafts 23, 24 and a group of gears 25. The jaws 14 and 15 are jointed or connected to the drive chains 18, 19 by suitable pins or with suitable connecting means allowing the jaws to rotate with the chains around the rollers or idle gears 20A and 21A positioned at one end and in the feeding direction of the bar 13, during the passage of the jaws 14 and 15 from the position inside the guideways 16 and 17, to support the bar, as shown in Fig. 1, to the position outside the guideways, as shown in Fig. 2.

The distance or pitch between the jaws 14, 15 may vary in each case, although this distance must be fairly small in order to support bars of different diameters adequately, without allowing them to yield or bend. Moreover, as shown in Fig. 1, the distance between the first jaws and a rear pusher 26 may be extremely short, in this way eliminating the presence of long unguided and unsupported portions of bar. It may likewise be convenient, at the beginning of each set of jaws, for the last one to be further spaced apart than the others, for example double or a multiple of the pitch, so that during the loading of a bar, when all the jaws have withdrawn between the two guideways 16 and 17, the jaws 14A and 15A position substantially at the front end of the guideways.

Reference 26 in Fig. 1 moreover denotes a main pusher for moving the bar 13 forwards. At its front end the pusher 26 is provided with a rotating collet 27 or equivalent gripping means in which the rear end of the bar 13 is inserted, as shown. In the example in Fig. 1, the pusher 26 is connected to the chains 18 and 19 by means of link rods 28 and 29 which allow a constant centering action and a coaxial arrangement of the pusher with the bar 13, independently of the position assumed by the guideways 16 and 17.

In the case in Fig. 1, the pusher 26 is directly supported in an intermediate position by two pairs of link rods 28, and in its front position by means of individual link rods 29 connected by appropriate clamps to the drive chains 18 and 19. In Fig. 2 the pusher 26 is instead supported by a sleeve member 46 to which it is removably hooked by means of automatic hooking parts 47. In this case automatic hooking means have to be provided between the clamps of the link rods 28, 29 and the two chains for disengaging them at the end of the forward stroke, in this way allowing further movement forwards of the pusher.

Correspondingly, the guideways 16 and 17 for the bar support jaws are supported by the frame 11 of the feeder by means of a set of link rods 30 and 31 respectively, to enable the guideways 16 and 17 to move parallelly sideways with the jaws 14, 15 and the drive chains 18, 19 between a close condition in Fig. 1, in which the jaws 14 and 15 are supporting a bar 13, and a second spaced condition, not shown, for inserting or loading a new bar 13 to be fed, maintaining said guideways 16, 17 constantly parallel to the feed axis of the bars.

The reciprocating movement of the two guideways 16, 17 can be achieved by any drive device suitable for driving the joint movement of the guideways, for example by the lever drive system shown in Fig. 2.

In the example shown, the device for driving the guideways comprises a double-acting cylinder 32 which, by means of a lever 33 pivoted in 34, is connected to a block 35 jointed to two links 36, 37 connected one to the other by two synchronisation gears 38 and to the axes of the idle gears 20B, 21B. An adjustable stop member 39, indicated schematically, enables the stroke of the cylinder 32 or the rotation of the lever 33 to be varied in order to adjust in this way the closure position of the jaws 14 and 15 according to the diameter of the bars to be fed.

The working of the feeder according to the present invention is briefly described with reference to figures 1 and 2 of the accompanying drawings. Initially the two guideways 16 and 17 are spaced apart to open the jaws 14, 15 which are inside the guideways, as for example schematically indicated in Fig. 1, to allow loading of a bar to be fed. After the bar 13 has been inserted between the jaws, the two guideways 16 and 17 are closed together, acting on the drive device 32-37 until the jaws 14 and 15 are brought into contact with the bar 13 at the correct pressure. After the guideways and the jaws have been closed in the condition in figure 1, with the rear end of the bar inserted in the collet 27 of the main pusher, the drive 22 is actuated to drive by means of the two chains 18 and 19 the movement of both the pusher 26 and the jaws 14 and 15, at the same time as the bar 13. Each individual jaw 14 and 15 accompany the bar 13 in its forward movement along a first internal track of the guideways 16 and 17 until it reaches the front end at the rollers or idle gears 20A, 21A. At that point the individual jaws rotate around rollers moving in succession from the internal track (figure 1) to an external track (figure 2) of the guideways, while the bar 13 continues to move forwards. In this way the bar is perfectly supported, guided and accompanied without any dragging along the jaws, preventing the bar 13 from bending and likewise the onset of vibrations or hazardous impact which could damage the bar or the machine tool or cause unsatisfactory machining. The construction of the feeder is moreover extremely simplified, having at the same time the possibility of using a same feeder for bars of different diameters.

After the bar 13 has been made to move forwards completely by the main pusher 26 and is in the condition shown in figure 2, the support jaws 14 and 15 are totally outside of the respective guideways 16 and 17. At this point a second pusher may become involved, in place of or together with the previous one in order to push the bar further forwards along the spindle of the machine tool.

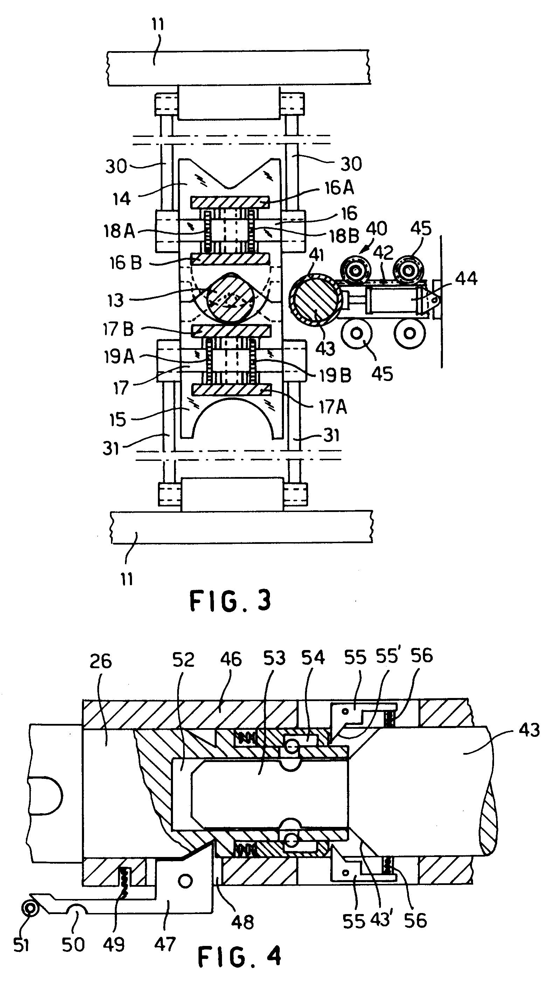

In the example of figure 3, the guideways 16 and 17 each comprise two flat bars 16A, 16B, and 17A, 17B respectively, defining the internal and external slideway tracks of the jaws. Said flat bars are attached to the opposite sides of a central plate to which the link rods 30 and the link rods 31 respectively are jointed. The jaws 14, 15 are configured to slide along the sections 16A, 16B, 17A and 17B. In this case the individual jaws are connected to two drive chains 18A, 18B and 19A, 19B. It can also be seen that the jaws 14 are different from the jaws 15; the jaws 14 have a V-shaped seat for the bar 13, while the jaws 15 have a semicircular seat in order to adapt better to bars of different diameter and to maintain said bars perfectly centered with the feeding axis. Nevertheless it is not excluded that the jaws 14 and 15 can be identical or have shapes which correspond one to the other. Fig. 3 shows moreover, by dotted lines, the possibility of varying the position of closure of the jaws to adapt to bars of greater or smaller diameter.

Figure 3 also shows the use of a second pusher, denoted as a whole by 40, which acts in combination with the main pusher 26 to move the bar forwards in the final section after all the jaws have moved to the external side of the guideways.

The pusher 40, in the example shown, may comprises a long stroke double-acting cylinder 44 slidingly carried sideways by a set of racks 42 to be moved between a backward position, shown in figure 3, outside of the guideways of the feeder, and a forward position between the abovementioned guideways, in which the stem 43 of the cylinder is coxially aligned with the bar 13, at the rear of the main pusher 26. The forward or backward driving of the pusher 40 may be achieved for example by means of a double-acting cylinder 44. The racks 42 are supported and driven to move simultaneously by means of cogged wheels and/or rollers 45 as represented schematically, connected by respective shafts which extend longitudinally to the feeder.

In the case wherein the stem 43 of the additional pusher has to hook up with the main pusher 26, use may be made of the automatic coupling shown in Fig. 4. In this case the pusher 26 is carried, in an axially removable manner, by a sleeve 46 as shown schematically also in Fig. 2.

In the case shown, the automatic hooking device between the main pusher 26 and the secondary pusher 40 may be of the type shown in figure 4 in which a lever 47 pivoted to the sleeve 46, penetrates through a side opening 48 to engage in a seat on the external surface of the pusher 26. The lever 47 is urged by a spring 49 in the engagement condition and, at a predetermined point of the forward stroke of the feeder, a notch 50 in the lever 47 engage with a fixed ratchet 51 which maintains the lever 47 disengaged from the pusher 26. The pusher 26 has moreover, on the rear end, an axial cavity 52 into which a snug 53, provided at the front end of the stem 43, penetrates. As shown, a ball coupling system 54, in itself known, co-operates with ratchets 55 urged by springs 56; the ratchets are provided with appropriate slanted surfaces 55', co-operating with a slanted surface 43' of the pusher 43 which enable the stem 43 to engage and disengage automatically with the main pusher 26. In place of the automatic coupling of figure 4, any other connection system, suitable for the purpose, may be used.

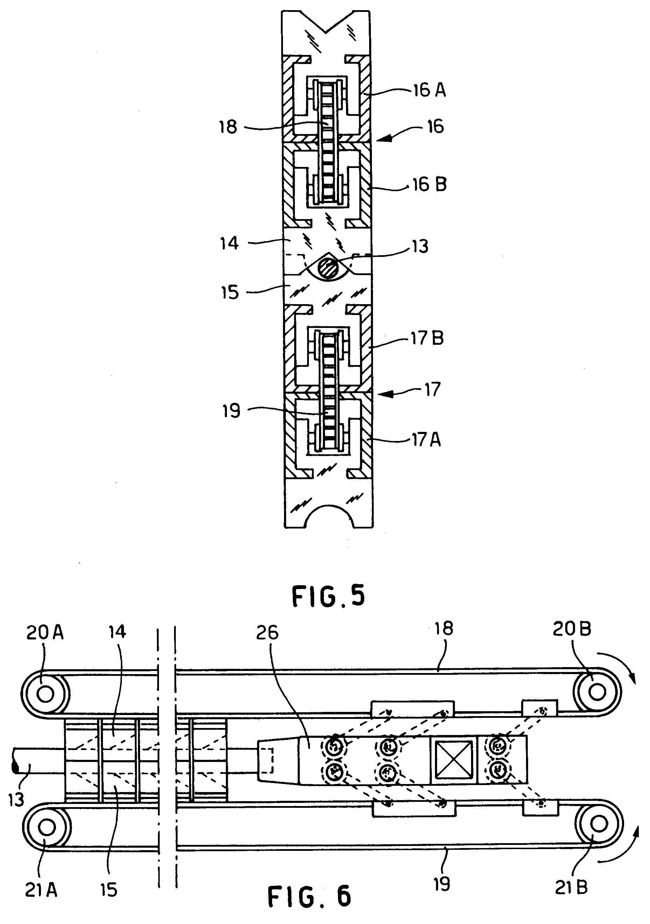

Figure 5 of the accompanying drawings shows a simpler solution, in which the guideways 16 and 17 are composed of opposite tubular sections 16A, 16B and 17A, 17B, appropriately fixed one to the other, in which appropriate rear extensions of the jaws 14 and 15 run, the latter in this case being connected or jointed to a single central chain 18 and 19. For the remaining parts neither does the solution in figure 5 differ substantially from the previous ones.

Finally figure 6 shows schematically the fundamental parts of a feeder in which the jaws 14 and 15 supporting the bar 13 are close to and opposite one to the other, unlike the solution shown in figures 1 and 2 where the upper jaws alternate and are in an intermediate position to the lower jaws. The solutions in figures 5 and 6 are particularly suitable for feeding bars which are very small in diameter.

## Claims

1. A device for feeding a bar (13) along a feeding axis of a machine tool, said device comprising: a frame (11), bar support means for rotatably supporting the bar (13), said bar support means (14, 15) being movable between open and closed conditions; at least one main pusher (27) for moving the bar (13) forwards along said feeding axis, as well as drive means (22) for reciprocating said pusher (27) in the feeding direction of the bar (13), characterised in that said bar support means comprise first and second sets of jaws (14, 15) axially aligned with and movable along respective guideways (16, 17) parallelly arranged on the two opposite sides of said feeding axis; in that said bar support jaws (14, 15) and the pusher (27) are connect to drive chains (18, 19) to move together with the bar (13); and in that link means (30, 31, 28, 29) are provided for connecting the pusher (27) to said chains (18, 19) and for connecting respectively the guideways (16, 17) of the jaws to the frame (11) of the machine, the device likewise comprising second drive means (32) to move said guideways (16, 17), with the jaws (14, 15) between a retracted condition spaced from and an advanced condition close to the bar feeding axis, maintaining the pusher (27) constantly aligned with the feed axis for the bars.

2. A feeding device according to claim 1, characterised in that said jaws (14, 15) for supporting the bar (13) move in succession along an internal track and along an external track respectively of said guideways (16, 17).

3. A feeding device according to claim 1, further characterised in that by comprising adjustable stop means (39) for adjusting the position of the jaws (14, 15) in the advanced condition of the guideways (16 17).

4. A feeding device according to claim 1, characterised in that said jaws (14, 15) have a circular and/or V-shaped seat for guiding the bar (13).

5. A feeding device according to claim 1, characterised in that the jaws (14, 15) of each set are axially spaced apart one from another at a constant pitch and in that the last a jaw in each set, in the feeding direction of the bar, is more spaced compared to the other ones.

6. A feeding device according to claim 1, further characterised in that by comprising a second pusher (43) parallelly extending in the feeding direction of the bar (13), as well as support means and drive means (42, 44) for moving said second pusher (43) between a backward position outside of the slideways (16, 17), and a forward position in which said second pusher (43) is coaxially positioned to the main pusher (27) of the device.

7. A feeding device, according to claim 6, characterised in that the main pusher (27) is engageably and disengageably carried by a support sleeve (46), and in that the facing ends of the main pusher (27) and of the second pusher (43) comprise engageable and disengageable hooking means (53, 55).
